# EUROPEAN PATENT SPECIFICATION

(11) **EP 3 812 536 B1**
(45) Date of publication and mention of the grant of the patent: **07.02.2024**
(21) Application number: 20203648.9
(22) Date of filing: 23.10.2020
(51) Int. Cl.: E04H 7/22, B65D 88/12, B65G 67/60, B65G 63/00

(54) **DEVICE FOR TRANSSHIPPING DRY BULK CARGO**
VORRICHTUNG ZUM UMLADEN VON TROCKENEN MASSENGÜTERN
DISPOSITIF DE TRANSBORDEMENT DE CARGAISON DE VRAC SEC

(30) Priority: 25.10.2019 BE 201905741
(43) Date of publication of application: 28.04.2021
(73) Proprietor: Vijfde Havendok naamloze vennootschap, 2030 Antwerpen (BE)
(72) Inventor:
(74) Representative: Donné, Eddy

(56) References cited:
- EP-A1- 1 264 789
- EP-B1- 1 264 789
- WO-A1-88/09756
- CA-A1- 2 942 949
- DE-B- 1 182 598
- FR-A1- 2 821 342
- US-A- 3 014 604
- US-A1- 2011 063 942
- US-A1- 2014 083 554
- US-B1- 8 083 083

## Description

The present invention relates to a device for transshipping dry bulk cargo.

In particular, the invention is intended for transshipping and storing dry bulk cargo, transported by ships to a quay in a port.

It is known that dry bulk cargo, such as grain or raw materials for the building industry is transported in large quantities by purpose-built bulk carriers, i.e. ships with large holds or hold compartments into which bulk cargo can be deposited in large quantities.

Once arrived in the port of destination, the shipped bulk cargo must be brought ashore from the ship and deposited in the storage silos provided for this purpose, which can store the large quantities of dry bulk cargo and also protect it from atmospheric influences such as rain and wind.

Traditionally, a quay crane is used which can be moved along the landing quay and is positioned next to the ship to be unloaded. The quay crane is provided with a large grapple or bucket on a jib with which in one movement a big volume of dry bulk cargo can be picked up from the hold of the vessel to subsequently, following a rotational movement of the jib, position the load above a big collection hopper on the quay, in which the content of the grapple or bucket is discharged.

The bulk cargo is transported from the collection hopper by means of conveyor belts to the desired deposit site in one of the compartments of a flat bottom silo for example, whereby the conveyor belts transport the bulk cargo to the desired deposit site in the flat bottom silo via a gate in the flat bottom silo.

A disadvantage of this method is that the speed of discharging the ship is restricted by the capacity of the conveyor belts and by the repositioning of the conveyor belts to a next deposit site or another compartment of the flat bottom silo.

Another disadvantage is that the collection hopper also needs to be moved when the quay crane is unable to reach the current position of the collection hopper anymore after it was repositioned next to the ship to be discharged. Obviously, this involves a lot of time and manpower.

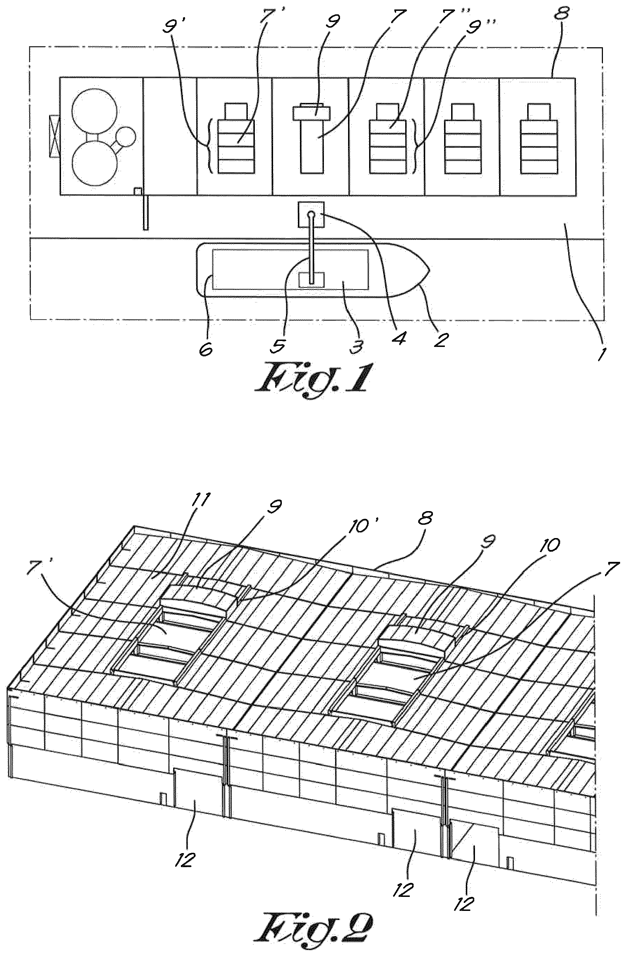

FR 2 821 342 A1 describes containers for amongst others maritime transport, provided with a roof composed of movable roof segments, mounted on their own pair of rails, whereby each roof segment has a different height above the rails and a different width, such that the roof segments can be telescoped and slid under the biggest roof segment (see Figs. 1, 2).

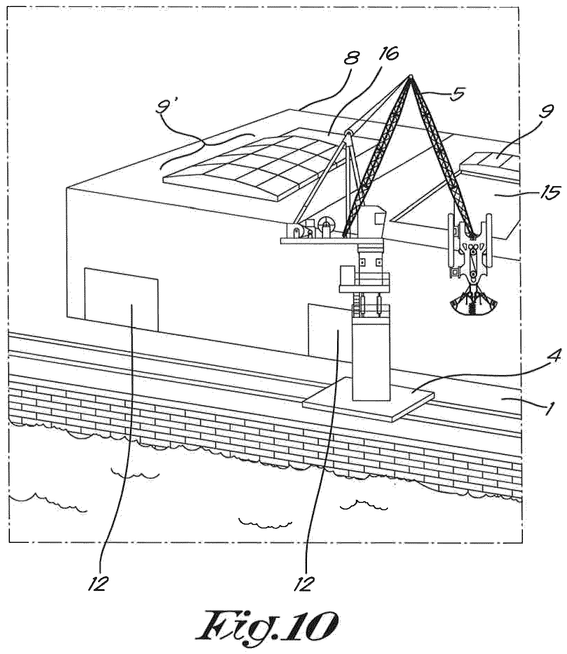

CA 2 942 949 A1 describes a container with a removable roof that can be opened driven by a motor (72) (see also Figs. 10-13).

DE 11 82 598 B describes a device for loading and unloading a ship (22), said device moving along a rail (4) fixed on a building (see figure), and guiding a conveyer belt for general cargo such as sacks to or from the cargo area of a nearby ship.

US 2014/0083554 A1 describes a flat bottom silo with several roof openings covered by flip-open covers.

US 8 083 083 B1 describes a flat bottom silo with several compartments with a funnel-shaped bottom whereby every compartment can be opened or closed with a movable cover.

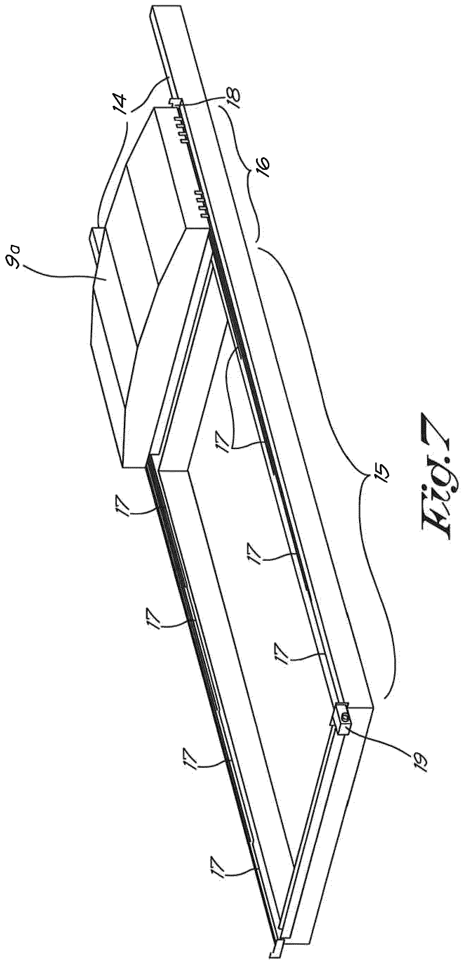

WO 88/09756 A1 describes mobile silos for bulk goods such as grains, that have a simple box-like form and can be conveyed by the usual means of transportation also employed for conventional container boxes. They can be stacked i.a. in port terminals and are piled on each other in an inclined position. They can be filled with grain by devices that suck the grain from a ship and transfer it to the mobile silos on the quay (see Fig. 7).

US 2011/0063942 A1 describes an integrated mixing and storage system for materials used in oil fields. The system uses an information management system in the form of a personal computer, which is connected with a cable to the mixing and storage system.

The purpose of the present invention is to provide a solution to the aforementioned and other disadvantages by providing a device which allows the discharge of a ship carrying dry bulk cargo to be sped up considerably.

To this end, the invention relates to a device comprising a quay crane and a flat bottom silo provided with a roof, that is provided with one or more roof openings which are each wholly or partly covered by a set of movable roof segments, which are movable by an electric motor or an electric winch such that they leave an opening in the roof above a targeted deposit site in the flat bottom silo, or above a compartment of the flat bottom silo, and whereby each individual roof segment of the set of movable roof segments above one roof opening is movably mounted on its own pair of rails, and whereby each individual roof segment of the set of roof segments has a different height above the rails and a different width in the width direction of the roof opening, such that a set of roof segments is telescopic and the individual roof segments are all slidable under the biggest roof segment of the targeted roof opening such that a maximum opening in the roof is created when all the individual roof segments are located in a position next to the roof opening, whereby the quay crane and the motor or electric winch of the sets of roof segments on the roof of the flat bottom silo are controlled by a wireless electronic control system operated by a quay crane operator or another operator.

An advantage of said device is that it allows the transshipment from ship to flat bottom silo without the use of conveyor belts, which would transport the bulk cargo via gates into the flat bottom silo, but on the contrary only uses the quay crane to transport the bulk cargo directly from the ship through the opened roof of the flat bottom silo to the deposit site in the flat bottom silo, whereby time and personnel are saved.

Each roof segment is movable lengthways from the roof opening into a position next to the roof opening. To this end, the edge of every roof opening is provided with a series of parallel rails which extend on either side of the roof opening and extend parallel with the longitudinal direction of the roof opening and whereby each roof segment is movably mounted on its own pair of rails.

An advantage of said movable roof segments is that they can be moved at will, and if the roof opening is closed with them, protect the bulk cargo against atmospheric influences, as the roof segments are watertight and drain in the width direction of the roof opening. To this end the roof segments are preferably provided with an automatic closure mechanism which automatically closes the roof opening in case of precipitation or at certain times of the day.

The crane operator or the other operator also has camera pictures, recorded by cameras on a jib and/or on the roof of the flat bottom silo and/or a drone which is temporarily positioned above the flat bottom silo, with the goal of providing real-time assistance to the operator to correctly position the load on the quay crane above the desired roof opening and finally to deposit the load at the desired deposit position.

The invention also relates to a method for the transshipment of bulk cargo from a moored cargo ship to a flat bottom silo, said method using the device described above comprising a quay crane and a flat bottom silo provided with a roof, that is provided with one or more roof openings which are each wholly or partly covered by a set of movable roof segments.

This method allows the transshipment time to be reduced and makes the use of conveyor belts unnecessary. This method consists of at least the following next steps:
(i) moving a quay crane equipped for the transshipment of bulk cargo to a position from where the quay crane can pick up the bulk cargo from the hold of a cargo ship;
(ii) opening one or more desired sets of telescopic roof segments of a targeted roof opening in the flat bottom silo under which the desired deposit site in the flat bottom silo on the quay is located;
(iii) transshipping bulk cargo from the ship by means of the quay crane, whereby the picked up load is positioned by the quay crane above the opening under which the desired deposit site in a flat bottom silo on the quay is located;
(iv) depositing the load in the desired deposit site in the flat bottom silo on the quay;
(v) repeating step (i) to (iv) until the desired quantity of bulk cargo is deposited in the desired deposit site in the flat bottom silo on the quay;
(vi) closing the set of roof segments of the targeted roof opening under which the desired quantity of bulk cargo was deposited to protect the stored bulk cargo against atmospheric influences;
whereby a quay crane operator or another operator uses a wireless electronic control system with which the operator opens or closes the desired set of roof segments and with which the quay crane itself is also operated.

The roof segments can be provided with an automatic closure mechanism which automatically closes the roof opening in case of precipitation or at certain times of the day to avoid unwanted atmospheric circumstances.

Preferably, the roof segments are provided with one or more electrically driven motors which can set the roof segments in motion. The quay crane is also provided with an electric drive with which the crane can be moved over the quay, for example on rails provided to this end.

The crane operator has camera pictures for this, recorded by cameras on a jib and/or on the roof of the flat bottom silo and/or a drone temporarily positioned above the flat bottom silo, to provide real time assistance to correctly position the jib of the quay crane to pick up a large quantity of dry bulk cargo from the hold of a moored ship and to subsequently lift the load and rotate the quay crane and move it to the desired roof opening and finally to deposit the load at the desired deposit position.

With the intention of better showing the characteristics of the invention, a preferred embodiment of a device for handling and storing dry bulk cargo according to the invention is described hereinafter, by way of an example without any limiting nature, with reference to the accompanying drawings wherein:
figure 1 schematically and from above shows a discharging quay with a quay crane and a flat bottom silo with roof openings according to the invention;
figure 2 shows a perspective view of a part of the flat bottom silo with roof openings of figure 1;
figure 3 shows figure 1 but with the jib of the quay crane positioned above a roof opening;
figure 4 shows a side view of the edge of a roof opening in a flat bottom silo with extended roof segments;
figure 5 shows figure 4 but now with telescoped roof segments;
figure 6 shows a perspective view of figure 4;
figure 7 shows a perspective view of figure 5;
figure 8 shows a perspective view of a variant roof edge of a roof opening according to the invention;
figure 9 shows a detail indicated with F9 on figure 8 on a larger scale;
figure 10 shows a perspective view of a quay crane for bulk cargo on a quay and a flat bottom silo according to the invention.

Figure 1 schematically presents a discharging quay 1, on which a cargo ship 2 loaded with bulk cargo 3 is moored and on which a movable quay crane 4 is set up, which by means of a jib 5 can pick up a large quantity of bulk cargo 3 from the hold 6 of the cargo ship 2 and subsequently can position the jib 5 above a desired roof opening 7 in a flat bottom silo 8, which is opened to maximum extent because the group of roof segments 9 are all telescoped in a position next to the roof opening 7. The adjoining roof openings 7' and 7" are closed by the extended groups of roof segments 9' and 9".

Figure 2 shows a bird's-eye view of a part of the flat bottom silo 8 with roof openings 7, 7', 7" according to the invention. The roof openings are delimited by a roof edge 10, 10' over which groups of roof segments 9, 9' were telescoped up against the opening in the roof 7, 7", such that the opening 7, 7' in the roof 11 of the flat bottom silo 8 is opened to maximum extent. The flat bottom silo 8 is provided with gates 12, through which the inner area of the flat bottom silo 8 can be accessed or through which conveyor belts can be guided in.

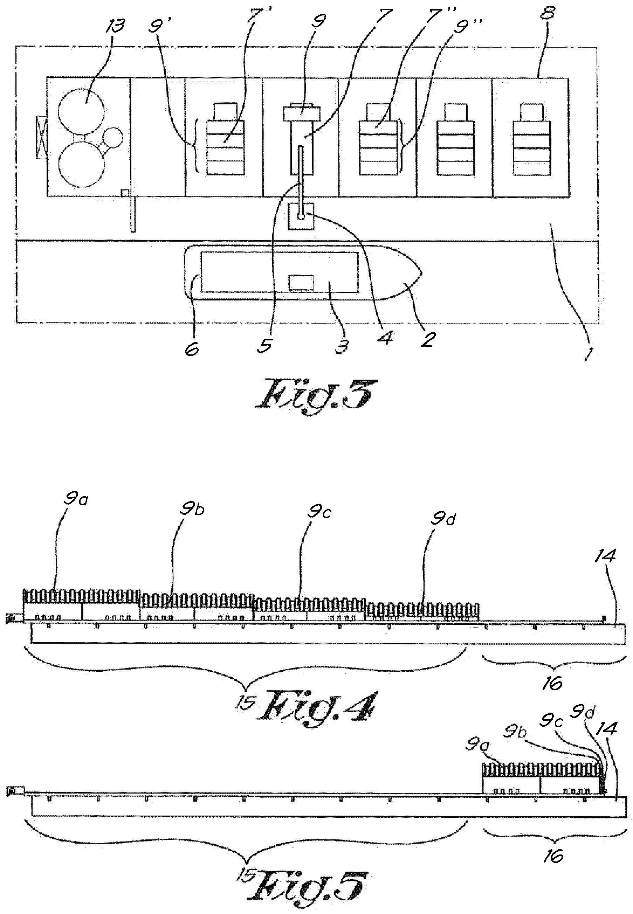

Figure 3 shows figure 1, but now with the jib 5 positioned above the desired roof opening 7 in the flat bottom silo 8, ready to deposit the dry bulk cargo in the desired deposit site. In a space adjacent to the flat bottom silo with compartments, the necessary equipment 13 to process the dry bulk cargo is located.

Figure 4 shows a side view of the roof edges 14 of one roof opening 15 in the flat bottom silo whereby the roof segments 9a, 9b, 9c, 9d, are extended and completely cover the roof opening 7. The adjoining part 15 between the roof edges 14 is part of the closed roof 11 of the flat bottom silo 8 and is permanently covered.

Figure 5 shows figure 4 but now with telescoped roof segments 9a, 9b, 9c, 9d, which are all located above the adjoining part 15 between the roof edges 14 which is permanently covered. In said position of the group of roof segments 9 the roof opening 7 is opened to maximum extent, and dry bulk cargo can be deposited through said roof opening in the desired deposit position.

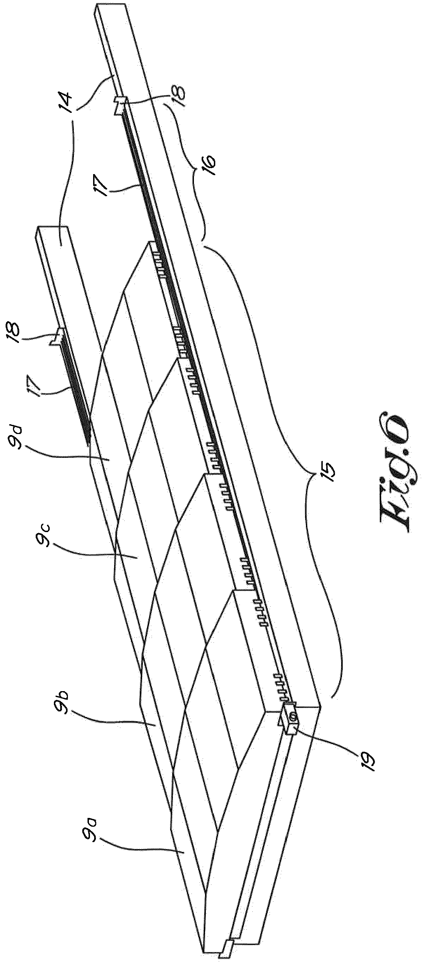

Figure 6 shows figure 4 but now in a perspective view, whereby the different height and width of each of the roof segments 9a, 9b, 9c, 9d and also the stops 16 for the rails 17 lying next to each other are visible, whereby each roof segment has its own pair of rails 17, which all end at a same pair of stops 16. The drive mechanism 18, 19 which moves the roof segments is an electrically driven winch in this case.

Figure 7 shows figure 5 but now in a perspective view, whereby the different roof segments 9a, 9b, 9c, 9d are telescoped and the roof opening 7 is opened to maximum extent. The roof segments 9a, 9b, 9c, 9d are slid up against the pair of stops 16, over rails 17 which have a different length for each roof segment.

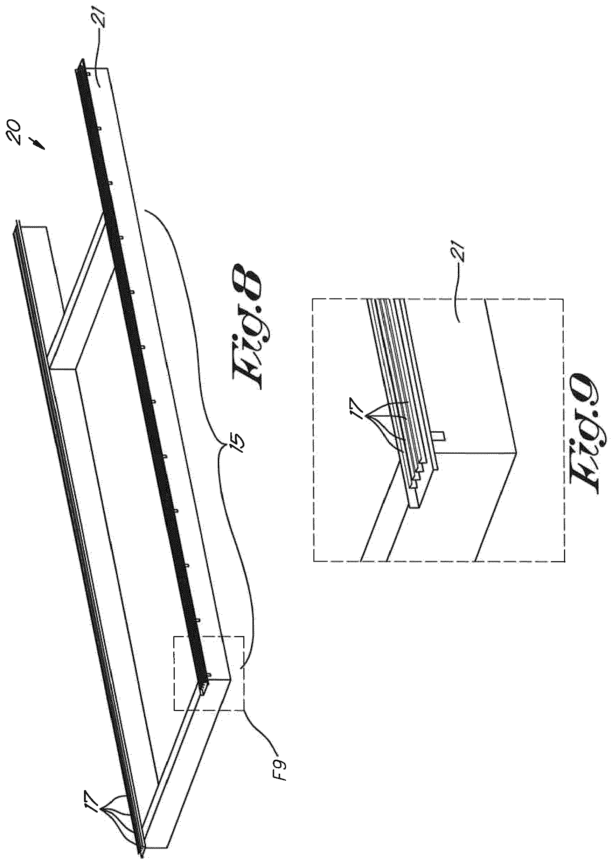

Figure 8 shows a variant 20 of a roof edge 21 of a roof opening 7 whereby all rails 17 for all roof segments span the full length of the roof edge 21.

Figure 9 shows a detail on a larger scale, indicated with F9 in figure 8, whereby the adjacent rails 17 with equal length are more visible.

Figure 10 shows a perspective view of a quay 1 provided with a quay crane 4 for transshipping bulk cargo, on which a flat bottom silo 8 according to the invention is built, provided with roof openings 7 and whereby one roof opening is covered with an extended group of roof segments 9a, 9b, 9c, 9d and another roof opening 7 is opened to maximum extent after its group of roof segments 9a, 9b, 9c, 9d was telescoped and is located above the adjoining part 15 of the roof 11 that is permanently covered.

The present invention is by no means limited to the embodiments described as an example and shown in the drawings, but such a device and method for applying said device can be realised according to different variants without departing from the scope of the invention, as is defined in the following claims.

## Claims

1. Method for transshipping dry bulk cargo, the method at least consisting of the following steps:
(i) moving a quay crane (4) equipped for the transshipment of bulk cargo to a position from where the quay crane can pick up the bulk cargo (3) from the hold (6) of a cargo ship (2) ;
(ii) opening one or more desired sets of telescopic roof segments (9a, 9b, 9c, 9d) of a targeted roof opening (7) in a flat bottom silo (8) under which the desired deposit site in the flat bottom silo (8) on the quay is located;
(iii) transshipping bulk cargo (3) from the ship (2) by means of the quay crane (4), whereby the picked up load is positioned by the quay crane above the opening (7) under which the desired deposit site in a flat bottom silo (8) on the quay is located;
(iv) depositing the load in the desired deposit site in the flat bottom silo (8) on the quay;
(v) repeating step (i) through (iv) until the desired quantity of bulk cargo (3) is deposited in the desired deposit site in the flat bottom silo (8) on the quay;
(vi) closing the set of roof segments (9abcd) of the targeted roof opening (7) under which the desired quantity of bulk cargo (3) was deposited;
whereby a quay crane operator or another operator uses a wireless electronic control system with which the operator opens or closes the desired set of roof segments (9abcd) and with which the quay crane (4) itself is also operated.

2. Device used in the method described in claim 1, comprising a quay crane (4) and a flat bottom silo (8), provided with a roof (11) that is provided with one or more roof openings (7) which are each wholly or partly covered by a set of movable roof segments (9abcd) which are movable by an electric motor or an electric winch (19) such that they leave an opening (7) in the roof (11) above a targeted deposit site in the flat bottom silo (8) or in a compartment of the flat bottom silo, and whereby each individual roof segment (9a, 9b, 9c, 9d) of the set of movable roof segments above one roof opening (7) is movably mounted on its own pair of rails (17), and whereby each individual roof segment (9a, 9b, 9c, 9d) of the set of roof segments (9abcd) has a different height above the rails (17) and a different width in the width direction of the roof opening (7), such that a set of roof segments (9abcd) is telescopic and the individual roof segments (9a, 9b, 9c, 9d) are all slidable under the biggest roof segment (9a) of the targeted roof opening (7) such that a maximum opening in the roof is created when all the individual roof segments (9a, 9b, 9c, 9d) are located in a position (15) next to the roof opening (7), **characterised in that** the quay crane (4) and the motor or electric winch (19) of the sets of roof segments (9abcd) on the roof of the flat bottom silo (8) are controlled by a wireless electronic control system operated by a quay crane operator or another single operator.

3. Device according to claim 2, **characterised in that** the crane operator or the other operator also has camera pictures, recorded by cameras on a jib (5) and/or on the roof of the flat bottom silo (8) and/or a drone which is temporarily positioned above the flat bottom silo (8), with the goal of providing real-time assistance to the operator to correctly position the load on the quay crane (4) above the desired roof opening (7) and finally to deposit the load at the desired deposit position.

4. Device according to claim 2, **characterised in that** the roof segments (9a, 9b, 9c, 9d) are provided with an automatic closure mechanism which automatically closes the roof opening (7) in case of precipitation or at certain times of the day.

## Patentansprüche

1. Verfahren zum Umschlag von trockenem Schüttgut, **dadurch gekennzeichnet, dass** es mindestens aus folgenden Schritten besteht:
(i) Bewegen eines für den Umschlag von Schüttgut ausgerüsteten Kaikrans (4) an eine Position, von der aus der Kaikran das Schüttgut (3) aus dem Laderaum (6) eines Frachtschiffs (2) aufnehmen kann;
(ii)Öffnen einer oder mehrerer Gruppen von Schiebedachsegmenten (9a, 9b, 9c, 9d) einer entsprechenden Dachöffnung (7) in einem Flachbodensilo (8), unter der sich die gewünschte Abladestelle im Flachbodensilo (8) am Kai befindet;
(iii) Umschlag von Schüttgut (3) vom Schiff (2) mittels des Kaikrans (4), wobei die aufgenommene Last durch den Kaikran über der Öffnung (7) positioniert wird, unter der sich die gewünschte Abladestelle in einem Flachbodensilo (8) am Kai befindet;
(iv) Abladen der Ladung an der gewünschten Abladestelle im Flachbodensilo (8) am Kai;
(v) Wiederholung der Schritte (i) bis (iv), bis die gewünschte Menge an Schüttgut (3) an der gewünschten Abladestelle im Flachbodensilo (8) am Kai abgeladen ist;
(vi)Schließen der Dachsegmentgruppe (9abcd) der ensprechenden Dachöffnung (7), unter der die gewünschte Menge Schüttgut (3) abgeladen wurde;
wobei ein Kaikranführer oder ein anderer Bediener eine drahtlose elektronische Steuerung verwendet, womit der Kranführer bzw. Bediener die gewünschte Dachsegmentgruppe (9abcd) öffnet oder schließt und womit auch der Kaikran (4) selbst bedient wird.

2. Vorrichtung zur Durchführung des in Anspruch 1 beschriebenen Verfahrens, **dadurch gekennzeichnet, dass** die Vorrichtung einen Kaikran (4) und ein Flachbodensilo (8) umfasst, das mit einem Dach (11) versehen ist, das seinerseits mit einer oder mehreren Dachöffnungen (7) versehen ist, die ganz oder teilweise bedeckt sind durch eine Gruppe beweglicher Dachsegmente (9abcd), die mittles eines Elektromotors oder einer elektrischen Winde (19) so bewegt werden können, dass sie eine Öffnung (7) im Dach (11) über einer gewünschten Abladestelle im Flachbodensilo (8) oder in einer Kammer des Flachbodensilos hinterlassen, und wobei jedes einzelne Dachsegment (9a, 9b, 9c, 9d) der Gruppe von beweglichen Dachsegmenten (9a, 9b, 9c, 9d) über einer Dachöffnung (7) jeweils auf einem eigenen Schienenpaar (17) beweglich gelagert ist, und wobei jedes Dachsegment (9a, 9b, 9c, 9d) der Dachsegmentgruppe (9abcd) eine unterschiedliche Höhe über den Schienen (17) und eine unterschiedliche Breite in Breitenrichtung der Dachöffnung (7) aufweist, sodass die Dachsegmentgruppe (9abcd) ineinandergeschoben werden kann und die einzelnen Dachsegmente (9a,9b,9c,9d) unter das größte Dachsegment (9a) der Dachöffnung (7) geschoben werden können, sodass eine maximale Dachöffnung entsteht, wenn alle ineinandergeschobenen Dachsegmente (9a, 9b, 9c, 9d) in einer Position (15) neben der Dachöffnung (7) angeordnet sind, **dadurch gekennzeichnet** das der Kaikran (4) und der Motor oder die elektrische Winde (19) der Dachsegmentgruppen (9abcd) auf dem Dach des Flachbodensilos (8) über eine drahtlose elektronische Steuerung gesteuert werden, die von einem Kaikranführer oder einem anderen einzelnen Bediener bedient wird.

3. Vorrichtung nach Anspruch 2, **dadurch gekennzeichnet, dass** der Kranführer oder der andere Bediener auch über Kamerabilder verfügt, die von Kameras an einem Ausleger (5) und/oder auf dem Dach des Flachbodensilos (8) und/oder von einer Drohne, die vorübergehend über dem Flachbodensilo (8) positioniert ist, aufgenommen werden, mit dem Ziel, den Kaikranführer bzw. Bediener in Echtzeit dabei zu unterstützen, die auf dem Kaikran (4) befindliche Ladung richtig über der gewünschten Dachöffnung (7) zu positionieren und die Ladung schließlich in der gewünschten Abladeposition abzuladen;

4. Vorrichtung nach Anspruch 2, **dadurch gekennzeichnet, dass** die Dachsegmente (9a, 9b, 9c, 9d) mit einer Schließautomatik versehen sind, die bei Niederschlag oder zu bestimmten Tageszeiten die Dachöffnung (7) automatisch verschließt.

## Revendications

1. Procédé destiné au transbordement de marchandises sèches en vrac, le procédé étant au moins constitué par les étapes suivantes dans lesquelles :
(i) on déplace une grue de quai (4) qui est équipée pour le transbordement de marchandises en vrac jusqu'à une position à partir de laquelle la grue de quai peut récupérer les marchandises en vrac (3) à partir de la cale (6) d'un navire de transport de marchandises (2) ;
(ii) on ouvre un ou plusieurs jeux souhaités de segments de toit télescopique (9a, 9b, 9c, 9d) d'une ouverture de toit ciblée (7) dans un silo à fond plat (8), en dessous de laquelle est situé le lieu de dépôt souhaité dans le silo à fond plat (8), sur le quai ;
(iii) on transborde les marchandises en vrac (3) à partir du navire (2) au moyen de la grue de quai (4) ; dans lequel la charge qui a été récupérée est disposée par l'intermédiaire de la grue de quai au-dessus de l'ouverture (7) en dessous de laquelle est situé le lieu de dépôt souhaité dans un silo à fond plat (8), sur le quai ;
(iv) on dépose la charge au lieu de dépôt souhaité dans le silo à fond (8), sur le quai ;
(v) on répète les étapes (i) à (iv) jusqu'à ce que la quantité désirée des marchandises en vrac (3) ait été déposée au lieu de dépôt souhaité dans le silo à fond plat (8), sur le quai ;
(vi) on ferme le jeu de segments de toit (9abcd) de l'ouverture de toit ciblée (7) en dessous de laquelle la quantité souhaitée de marchandises en vrac (3) a été déposée ;
dans lequel un opérateur de la grue de quai ou un autre opérateur utilise un système de commande électronique sans fil avec lequel l'opérateur ouvre ou ferme le jeu souhaité de segments de toit (9abcd) et avec lequel la grue de quai (4) elle-même est également actionnée.

2. Dispositif utilisé dans le procédé décrit à la revendication 1, qui comprend une grue de quai (4) et un silo à fond plat (8) équipé d'un toit (11) qui est muni d'une ou de plusieurs ouvertures de toit (7) qui sont recouvertes en tout ou en partie par un jeu de segments de toit mobiles (9abcd) qui peuvent être déplacés par l'intermédiaire d'un moteur ou d'un treuil électrique (19) d'une manière telle qu'ils laissent subsister une ouverture (7) dans le toit (11) au-dessus d'un lieu de dépôt ciblé dans le silo à fond plat (8) ou dans un compartiment du silo à fond plat ; et dans lequel chaque segment de toit individuel (9a, 9b, 9c, 9d) du jeu de segments de toit mobiles au-dessus d'une ouverture de toit (7) est monté en mobilité sur sa propre paire de rails (17) ; et dans lequel chaque segment de toit individuel (9a, 9b, 9c, 9d) du jeu de segments de toit (9abcd) possède une hauteur différente au-dessus des rails (17) et une largeur différente dans la direction en largeur de l'ouverture de toit (7), d'une manière telle qu'un jeu de segments de toit (9abcd) est télescopique et que les segments de toit individuels (9a, 9b, 9c, 9d) peuvent tous coulisser en dessous du segment de toit le plus grand (9a) de l'ouverture de toit ciblée (7) de telle façon que l'on obtient une ouverture maximale dans le toit lorsque la totalité des segments de toit individuels (9a, 9b, 9c, 9d) se trouvent dans une position (15) située à côté de l'ouverture de toit (7), **caractérisé en ce que** la grue de quai (4) et le moteur ou le treuil électrique (19) des jeux de segments de toit (9abcd) sur le toit du silo à fond plat (8) sont commandés par un système de commande électronique sans fil actionné par un opérateur de la grue de quai ou par un autre opérateur unique.

3. Dispositif selon la revendication 2, **caractérisé en ce que** l'opérateur de la grue ou l'autre opérateur dispose également d'images filmées, enregistrées par des caméras sur une flèche (5) et/ou sur le toit du silo à fond plat (8) et/ou sur un drone qui est positionné de manière temporaire au-dessus du silo à fond plat (8), dans le but de procurer une assistance en temps réel à l'opérateur afin de positionner correctement la charge sur la grue de quai (4) au-dessus de l'ouverture de toit souhaitée (7) et en définitive de déposer la charge à l'endroit de dépôt souhaité.

4. Dispositif selon la revendication 2, **caractérisé en ce que** les segments de toit (9a, 9b, 9c, 9d) sont munis d'un mécanisme de fermeture automatique qui ferme de manière automatique l'ouverture de toit (7) dans le cas de précipitations ou à certains moments de la journée.
